Europäisches Patentamt

European Patent Office

Office européen des brevets

(19)

(11) **EP 1 135 273 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.$^7$: **B60K 28/16**, B60K 23/08, B60K 23/04, B60K 17/346, B60T 8/26

(21) Anmeldenummer: 00975830.1

(22) Anmeldetag: **11.10.2000**

(86) Internationale Anmeldenummer:
**PCT/DE2000/003567**

(87) Internationale Veröffentlichungsnummer:
**WO 2001/026925 (19.04.2001 Gazette 2001/16)**

(54) **VERFAHREN UND VORRICHTUNG ZUR REALISIERUNG EINER DIFFERENTIALSPERRENFUNKTION FÜR EIN FAHRZEUG**

METHOD AND DEVICE FOR EXERCISING A DIFFERENTIAL BLOCKING FUNCTION FOR A VEHICLE

PROCEDE ET DISPOSITIF DE REALISATION D'UNE FONCTION DE BLOCAGE DIFFERENTIEL POUR UN VEHICULE

(84) Benannte Vertragsstaaten:
**DE FR GB**

(30) Priorität: **12.10.1999 DE 19949270**

(43) Veröffentlichungstag der Anmeldung:
**26.09.2001 Patentblatt 2001/39**

(73) Patentinhaber: **ROBERT BOSCH GMBH
70442 Stuttgart (DE)**

(72) Erfinder: **ERBAN, Andreas
74321 Bietigheim-Bissingen (DE)**

(56) Entgegenhaltungen:
DE-A- 3 421 776      DE-A- 19 804 716
DE-C- 4 418 773

• ZANTEN VAN A ET AL: "FDR - DIE FAHRDYNAMIK-REGELUNG VON BOSCH" ATZ AUTOMOBILTECHNISCHE ZEITSCHRIFT,DE,FRANCKH'SCHE VERLAGSHANDLUNG. STUTTGART, Bd. 96, Nr. 11, 1. November 1994 (1994-11-01), Seiten 674-678,683-68, XP000478694 ISSN: 0001-2785

**Beschreibung**

Stand der Technik

Die Darstellung bzw. Realisierung einer Differentialsperrenfunktion, insbesondere die Realisierung einer Längssperrenfunktion, durch aktives Abbremsen von Rädern mit zu hohem Antriebsschlupf ist aus dem Stand der Technik bekannt. Die Darstellung bzw. Realisierung einer Längssperrenfunktion erfolgt bisher für gewöhnlich durch Anwendung von sogenannten Einzelradregelungen. Dabei übernimmt die Einzelradregelung gleichzeitig die Sperrwirkung in Querrichtung und in Längsrichtung.

In der DE 34 21 776 A1 ist ein Fahrzeug mit Allradantrieb beschrieben. Bei diesem Fahrzeug sind sowohl die Räder einer Achse mit der Antriebswelle als auch die Antriebswellen mit dem Antriebsmotor über Ausgleichsgetriebe verbunden. Der DE 34 21 776 A1 liegt die Aufgabe zugrunde, eine elektronische Alternative für die Differentialsperren zu schaffen. Die elektronische Differentialsperre wird dadurch realisiert, daß an den einzelnen Radbremsen entsprechend dem Auftreten von Antriebsschlupf Bremsdruck eingespeist wird. D.h. es wird eine Bremsung eines oder mehrerer Räder durchgeführt, wenn dieses Rad oder diese Räder im Vergleich zu den anderen Rädern durchdreht oder durchdrehen. Wenn auch das letzte der Räder durchdreht, dann wird das Motordrehmoment reduziert. Mit anderen Worten: Alle Räder werden auf optimalen Antriebsschlupf geregelt und ermöglichen damit eine gute Seitenführung.

Der DE 34 21 776 A1 ist bzgl. der Realisierung der Differentialsperrenfunktion lediglich die Einspeisung von Bremsdruck zu entnehmen. Die Verwendung oder Bereitstellung einer konkreten Vorgabe über die Höhe des einzuspeisenden Bremsdrukkes ist dieser Schrift nicht zu entnehmen. Folglich ist ihr auch nicht zu entnehmen, daß im Rahmen der Realisierung der Differentialsperre ein Bremsmoment gemäß einem vorgegebenen Sollwert eingestellt wird. Somit ist durch die so durchgeführten Eingriffe nicht gewährleistet, daß durch diese die Geschwindigkeiten der angetriebenen Fahrzeugachsen einander in gewollter Weise angenähert werden.

Aus der gattungsgemäßen DE 198 04 716 A1 ist eine Vorrichtung mit einer Längssperrenfunktion zum Steuern von Antriebskraft bekannt, die zwischen einer Straßenoberfläche und jedem von zwei Antriebsrädern eines Kraftfahrzeugs erzeugt wird, die ein Differential, das zwischen den Antriebsrädern und einer Antriebskraftquelle angeordnet ist und die Antriebsräder auf eine Differentialweise verbindet, und zwei Bremsen zum voneinander unabhängigen Bremsen jeweiliger der Antriebsräder aufweist, wobei die Vorrichtung zwei Raddrehzahlsensoren zum Erfassen der Drehzahlen der jeweiligen Antriebsräder und eine auf die Ausgangssignale der Sensoren reagierende Bremsensteuervorrichtung zum Betätigen einer der zwei Bremsen beinhaltet, welche einem der Antriebsräder entspricht, welches einen kleineren kritischen Wert der Antriebskraft bezüglich der Straßenoberfläche aufweist, um dadurch ein Bremsdrehmoment auf das zuvor angegebene eine Antriebsrad zum Erhöhen des Scheinwerts der Antriebskraft dieses einen Antriebsrads auszuüben, um den Istwert des anderen Antriebsrads zu erhöhen, welches einen größeren kritischen Wert der Antriebskraft aufweist.

In der Automobiltechnischen Zeitschrift (ATZ) , Vol 96, No. 11 vom 11.1.1994 ist im Rahmen des Beitrags "FDR - Die Fahrdynamikregelung von Bosch" der Autoren van Zanten, Erhardt und Pfaff ein Quersperrenregler beschrieben. Dabei wird auf Bild 7, die rechte Spalte von S. 676 sowie die linke Spalte von S. 683 verwiesen. Eine Längssperrenregelung ist diesem Beitrag nicht zu entnehmen.

Aus der DE 44 18 773 C1 ist ein Verfahren zur Erhöhung des Antriebsmoments eines Fahrzeugs bekannt. Dabei ist an jeder angetriebenen Achse ein Differential zum Ausgleich einer Drehzahldifferenz zwischen Rädern der einen Fahrzeugseite und Rädern der anderen Fahrzeugseite dieser Achse angeordnet. Bei Überschreiten eines Einschaltschwellenwertes für die Drehzahldifferenz wird an den Rädern an einer Fahrzeigseite der angetriebenen Achse, die eine größere Raddrehzahl aufweisen, ein Bremsmoment erzeugt.

Die Aufgabe der vorliegenden Erfindung besteht demzufolge darin, bestehende Verfahren bzw. Vorrichtungen zur Realisierung einer Längsperrenfunktion zu verbessern.

Diese Aufgabe wird durch die Merkmale des Anspruchs 1 bzw. durch die des Anspruchs 6 gelöst.

Vorteile der Erfindung

Bei dem erfindungsgemäßen Verfahren handelt es sich um ein Verfahren zur Realisierung einer Differentialsperrenfunktion für ein Fahrzeug. Mit dem erfindungsgemäßen Verfahren wird bei Durchdrehneigung wenigstens eines angetriebenen Rades mit Hilfe von fahrerunabhängig durchgeführten Eingriffen an wenigstens einem Mittel zur Beeinflussung des Radmoments die Funktion einer Differentialsperre realisiert. Bei der realisierten Differentialsperrenfunktion soll es sich vorzugsweise um eine zwischen der Vorderachse und der Hinterachse des Fahrzeuges wirkenden Differentialsperre handeln. Zur Durchführung der fahrerunabhängig durchgeführten Eingriffe wird wenigstens ein Sollwert für ein einzustellendes Radmoment vorgegeben.

Dabei handelt es sich bei dem Fahrzeug um ein Fahrzeug mit Allradantrieb. Außerdem handelt es sich bei der Differentialsperrenfunktion um eine zwischen der Vorderachse und der Hinterachse des Fahrzeuges wirkende Längssperre. Das im Ausführungsbeispiel für ein Allradfahrzeug dargestellte erfindungsgemäße Verfahren zur Realisierung einer Längssperrenfunktion kann in entsprechend abgeänderter Form auch für ein Fahrzeug mit einer einzigen angetriebenen Achse zur Realisierung einer Quersperrenfunktion eingesetzt werden. Auf diesen Einsatz soll allerdings im Rahmen der vorliegenden Anmeldung nicht näher eingegangen werden.

Durch die Vorgabe des wenigstens einen Sollwertes - bei einem Fahrzeug mit Allradantrieb liegen zwei angetriebene Achsen vor, weshalb zwei Sollwerte vorgegeben werden - werden die für die angetriebenen Fahrzeugachsen vorliegenden Geschwindigkeiten einander angenähert. Durch diese Maßnahme wird eine optimale Traktion für das Fahrzeug sichergestellt.

Bei dem Mittel zur Beeinflussung des Radmomentes handelt es sich vorteilhafterweise um einen einem Rad des Fahrzeuges zugeordneten Bremsaktuator, der Teil einer Bremsanlage ist, mit der fahrerunabhängig Bremsmomente an einzelnen Rädern des Fahrzeuges erzeugt werden können. Bei der Bremsanlage wiederum kann es sich um eine hydraulische oder elektrohydraulische oder pneumatische oder elektropneumatische oder elektromechanische Bremsanlage handeln. Alternativ zu dem Bremsaktuator kann eine steuerbare mechanische Sperre oder eine steuerbare Kupplung eingesetzt werden.

Eine solche steuerbare mechanische Sperre oder steuerbare mechanische Kupplung könnte zur Überbrückung eines offenen Mittendifferenzials oder zur direkten Ankopplung der zweiten Antriebsache an die Hauptantriebsachse, wie es beispielsweise bei einem Fahrzeug mit Frontantrieb und ankoppelbarem Hinterachsantrieb möglich wäre, dienen. Als Sollwert würde in diesem Fall das zu übertragende Koppelmoment verwendet werden, welches sich gemäß der Beziehung |MBrSymLSVA - MBrSymLSHA| ergibt. Dieser Sollwert wird über eine Momentenschnittstelle dem unterlagerten Regler als Sollwert für das Koppelmoment vorgegeben.

Handelt es sich bei dem Mittel zur Beeinflussung des Radmomentes um einen Bremsaktuator so wird vorteilhafterweise als Sollwert ein Sollwert für ein Radbremsmoment vorgegeben. Wenn es sich um ein Fahrzeug mit Allradantrieb handelt, welches folglich zwei angetriebene Achsen aufweist, dann wird für jede der beiden Achsen ein Sollwert vorgegeben.

In Abhängigkeit erster Radgeschwindigkeitsgrößen, die die freirollenden Radgeschwindigkeiten beschreiben, und einem Sollwert für den Antriebsschlupf, wird ein Sollwert für die Kardangeschwindigkeit einer Achse ermittelt wird. In Abhängigkeit von zweiten Radgeschwindigkeitsgrößen, die die mit Hilfe der Raddrehzahlsensoren ermittelten Radgeschwindigkeiten beschreiben, wird ein Istwert für die Kardangeschwindigkeit derselben Achse ermittelt wird. In Abhängigkeit dieses Sollwertes und dieses Istwertes wird eine Abweichungsgröße ermittelt. Diese Abweichungsgröße wird mit Hilfe eines PI-Reglers, in den Sollwert für ein einzustellendes Radmoment umgesetzt.

Der Sollwert für die Kardangeschwindigkeit wird so gewählt, daß die Differentialsperrenfunktion zeitlich vor einer Motormomentenregelung aktiviert wird. Insbesondere wird hierfür der Sollwert für die Kardangeschwindigkeit in Abhängigkeit einer Geschwindigkeitsgröße, die die Fahrzeuggeschwindigkeit beschreibt, ermittelt. Diese Vorgehensweise hat folgenden Hintergrund: Im Anfahrbereich werden zunächst Maßnahmen getroffen, um mittels Sperreneingriff die Traktion zu verbessern. Solange dieses Potential nicht ausgeschöpft ist, erfolgt nur eine leichte Reduktion des Motormoments. Erst wenn alle vier Räder zuviel Antriebsschlupf haben oder das Fahrzeug instabil wird erfolgt eine stärkere Reduktion des Antriebsmoments. Dies erfolgt durch Eingriffe der Motormomentenregelung.

Vorteilhafterweise werden bei der Ermittlung der Abweichungsgröße Einflüsse in den zweiten Radgeschwindigkeitsgrößen, die auf wechselseitige Schwingungen der Radgeschwindigkeiten an der jeweiligen Achse zurückgehen, berücksichtigt.

Dabei weist das Reglermittel einen Proportional- und einen Integralanteil auf. Die Integrationsverstärkung für den Integrationsanteil wird in Abhängigkeit des Wertes der differenzierten Abweichungsgröße ermittelt. Der Integralanteil wird schnell abgebaut, wenn für die jeweilige Achse wenigstens eine Radschlupfgröße einen vorgegebenen Wert überschreitet. Der Radschlupf wird aus folgendem Grund überwacht: Durch den aktiven Bremsdruckaufbau am Antriebsrad kann nie ganz ausgeschlossen werden, dass dieses Rad überbremst wird. Dies führt zu Bremsschlupf am überbremsten Rad, der sofort durch Druckabbau eliminiert werden muss.

Bei Allradfahrzeugen kann eine optimale Traktion nur dann erreicht werden, wenn alle Antriebsräder möglichst mit gleicher Geschwindigkeit drehen. Speziell zwischen Vorderachse (VA) und Hinterachse (HA) sollte möglichst keine oder nur eine geringe Differenzgeschwindigkeit auftreten, damit das Motormoment über die Räder optimal auf den Untergrund übertragen werden kann. Diese Vorgabe wird mit Hilfe des erfindungsgemäßen Verfahrens und der erfindungsgemäßen Vorrichtung erreicht.

Die Realisierung der Funktion einer Differentialsperre in Längsrichtung, d.h. zwischen der Vorderachse und der Hinterachse des Fahrzeuges, soll durch einen eigenständigen Regelkreis bewerkstelligt werden. Dadurch kann die sich ergebende Längssperrenwirkung, individuell geregelt werden. Dies soll durch einen auf Sollschlupfwerten basierenden Radgeschwindigkeitsregler realisiert werden.

Zu diesem Zweck ist das Fahrzeug vorteilhafterweise mit einer Schlupfregelvorrichtung ausgestattet, wie sie beispielsweise aus der in der Automobiltechnischen Zeitschrift (ATZ) 96, 1994, Heft 11, auf den Seiten 674 bis 689 erschienenen Veröffentlichung "FDR - Die Fahrdynamikregelung von Bosch" bekannt ist. Mit dieser Vorrichtung ist zudem die Regelung wenigstens einer Fahrzeugbewegungsgröße möglich. Bei dieser Fahrzeugbewegungsgröße handelt es sich um die Gierrate des Fahrzeugs. Zur Regelung der Gierrate des Fahrzeugs wird die gemessene Gierrate mit einem Sollwert für die Gierrate verglichen und eine Regelabweichung der Gierrate ermittelt, in deren Abhängigkeit fahrerunabhängige radindividuelle Bremseneingriffe und/oder Motoreingriffe durchgeführt werden. Hierzu werden in Abhängigkeit der Regelabweichung der Gierrate Sollschlupfänderungen und aus diesen dann für die einzelnen Räder die Sollschlupfwerte ermittelt. Diese Sollschlupfwerte werden Reglern, die dem Gierratenregler unterlagert sind, und mit denen der Bremsschlupf oder der Antriebsschlupf geregelt werden kann, zugeführt. Speziell im unterlagerten Regler, mit dem der Antriebsschlupf geregelt wird, wird der Sollschlupfwert in eine Sollradgeschwindigkeit zur Einstellung einer Radgeschwindigkeit umgerechnet. Vor allem durch die fahrerunabhängigen radindividuellen Bremseneingriffe wird ein Giermoment auf das Fahrzeug aufgebracht, durch welches sich die Istgierrate des Fahrzeuges an den Sollwert für die Gierrate annähert.

Diese vorstehend beschrieben Fahrdynamikregelung ist mittlerweile weitläufig auch als ESP (Electronic Stability Program) bekannt.

Der vorstehende Hinweis auf die Vorrichtung zur Durchführung einer Fahrdynamikregelung soll keine Einschränkung darstellen. Selbstverständlich kann das Fahrzeug auch mit einer Vorrichtung zur Durchführung einer Antriebsschlupfregelung oder einer anderen Vorrichtung zur Durchführung einer Schlupfregelung ausgestattet sein. Mit der Vorrichtung zur Durchführung einer Schlupfregelung muß allerdings die Durchführung von radindividuellen fahrerunabhängigen Bremseneingriffen, sogenannter aktiver Bremseneingriffe, möglich sein, denn diese sind für die Durchführung des erfindungsgemäßen Verfahrens erforderlich.

Vorteilhafterweise ist der erfindungsgemäße Längssperrenregler (L-Regler) so realisiert, daß er in eine bestehende Fahrdynamikregelung für beliebige Allradfahrzeuge integriert werden kann. Die problemlose Integrierbarkeit wird durch folgende Maßnahmen sichergestellt: Für den Längssperrenregler werden ausschließlich auf physikalischen Größen basierende Eingangsgrößen verwendet. Als Ausgangsgrößen werden für den Fall, daß es bei den Mitteln zur Beeinflussung des Radmoments um Bremsaktuatoren handelt, die beiden Momente MBrSymLSVA und MBrSymLSHA verwendet. Handelt es sich dagegen um eine steuerbare Sperre oder eine steuerbare Kupplung, so wird in diesem Fall das Koppelmoment |MBrSymLSVA - MBrSymLS-HA| verwendet. Jeder Steller, ob es sich nun um eine steuerbare Kupplung oder um eine steuerbare Sperre handelt, der auf Momentenbasis arbeitet, kann schnell an den Längssperrenregler angekoppelt werden. Wenn dies nicht möglich sein sollte, ist ein spezielles Interface vorzusehen. Bei solch einem Interface handelt es sich beispielsweise um ein Kennfeld für den Steuerstrom des Kupplungsstellers als Funktion des Koppelmoments.

Darüber hinaus ist der erfindungsgemäße Längssperrenregler so realisiert, daß er bei Bedarf mit einer Motormomentenregelung (AMR) harmoniert. Außerdem erfüllt er Offroad-Erfordernisse, d.h. ist bei Fahrten von Fahrzeugen auf einer Schlechtwegstrecke bzw. bei Fahrten im Gelände einsetzbar. Hierzu werden folgende Maßnahmen ergriffen: Mit zunehmender Regeldauer wird das maximale Längssperrenmoment (MBrSymlMax) größer. Gleichzeitig werden die Motormomentenreduktionen oberhalb bestimmter hoher Motormomente zunehmend schwächer. Im schweren Offroadgelände erfolgt dann fast keine Motormomentenreduktion mehr. Auf niedrigen Reibwerten erfolgt eine ausgeprägtere Motormomentenreduktion, was ein weiches Anfahren ermöglicht.

Weitere Vorteile sind:

- Die Synchronisation der beiden Kardangeschwindigkeiten erfolgt achsweise. Aus dynamischen Gründen (Schwingungsdämpfung) ist es von Vorteil, wenn jede Achse individuell geregelt werden kann. Dies hängt eng mit der Ausführungsform als Bremsen-Längssperre zusammen.

- Der Aufbau des Längssperrenmoments wird unter Verwendung eines PI-Reglers realisiert, da für den Fall, daß die Längssperre das Sperrmoment erhöhen muß, eine auswertbare Regelabweichung vorliegt. Wohingegen der Abbau des Längssperrenmoments mit Hilfe einer Steuerung erfolgt. In diesem Fall liegt keine auswertbare Regelabweichung vor.

- Geometrischer Schlupf, der eventuell aufgrund einer Kurvenfahrt vorliegen kann, wird herausgerechnet. Durch diese Maßnahme wird sichergestellt, daß ausgehend von einer eventuell vorliegenden Kurvenfahrt und dem damit verbundenen geometrischen Schlupf keine Eingriffe durchgeführt werden, die eigentlich nicht erforderlich sind. Der sogenannte geometrische Schlupf entsteht, weil beispielsweise die Vorderräder bei einer Kurvenfahrt auf kleineren Radien laufen als die entsprechenden Hinterräder. Ohne Kompensationsmaßnahmen würde eine Regelabweichung entstehen, die bei einer engen Kurvenfahrt die Längssperre aktivieren würde. Durch Berücksichtigung der kinematischen Zusammenhänge wird dieser Einfluss herausgerechnet. Diese Berücksichtigung erfolgt bereits bei der Ermittlung der freirollenden Radgeschwindigkeiten. Ohne Kompensation des geometrischen Schlupfes müßte die tote Zone des Längssperrenreglers aufgeweitet werden.

- Als Stellgröße wird achsweise ein Sollmoment an ein unterlagertes Stellglied ausgegeben. Das Stellglied kann ein Bremssystem mit der Möglichkeit des aktiven, d.h. fahrerunabhängigen Druckaufbaus sein. Ebenso kommt als Stellglied eine steuerbare mechanische Sperre oder eine steuerbare mechanische Kupplung in Frage, die zwischen der Vorderachse und der Hinterachse des Fahrzeuges wirkt. Im letzteren Fall muß allerdings dem Stellglied solch eine Stellgröße zugeführt werden, die die zwischen Vorderachse und Hinterachse einzustellende Differenz des Sollmoments repräsentiert. Hierfür eignet sich das Koppelmoment |MBrSymLSVA - MBrSymLSHA|.

- Die Dynamik des Längssperrenreglers ist unabhängig von den Quersperren einstellbar. Dies wird dadurch erreicht, daß zur Realisierung der Längssperrenfunktion ein eigenständiger Regler mit eigenem Parametersatz verwendet wird. Gleichzeitig läßt sich der Arbeitspunkt individuell so anpassen, daß ein harmonisches Zusammenspiel mit einer Motormomentenregelung möglich ist.

- Ein Abwürgeschutz für Fahrzeuge mit manuell betätigtem Getriebe verhindert im Bedarfsfall ein Abwürgen des Motors, welches durch eventuelle Aktivitäten des Längssperrenreglers ausgelöst werden kann. Der Abwürgeschutz ist aus folgendem Grund erforderlich: Durch die erfindungsgemäßen Eingriffe an den Mitteln zur Beeinflussung des Radmoments können die Räder so stark gebremst werden, daß der Motor des Fahrzeuges unter Umständen ausgeht. Um dies zu vermeiden, findet eine entsprechende Überwachung statt.

Der Abwürgeschutz ist folgendermaßen realisiert: Die Motordrehzahl wird überwacht. Unterschreitet diese einen bestimmten Mindestwert, so wird das Längssperrenmoment entsprechend stark reduziert, bis die Motordrehzahl diesen Mindestwert wieder überschritten hat. Der Mindestwert für die Motordrehzahl kann in Abhängigkeit vom Längssperrenmoment selbst, mittels Kennlinie vorgegeben werden. Zusätzlich ist sichergestellt, dass das Längssperrenmoment auf einen Anteil des momentan zur Verfügung stehenden Kardanantriebsmoment begrenzt wird.

Weitere Vorteile sowie vorteilhafte Ausgestaltungen können der Zeichnung sowie der Beschreibung des Ausführungsbeispiels entnommen werden.

Zeichnung

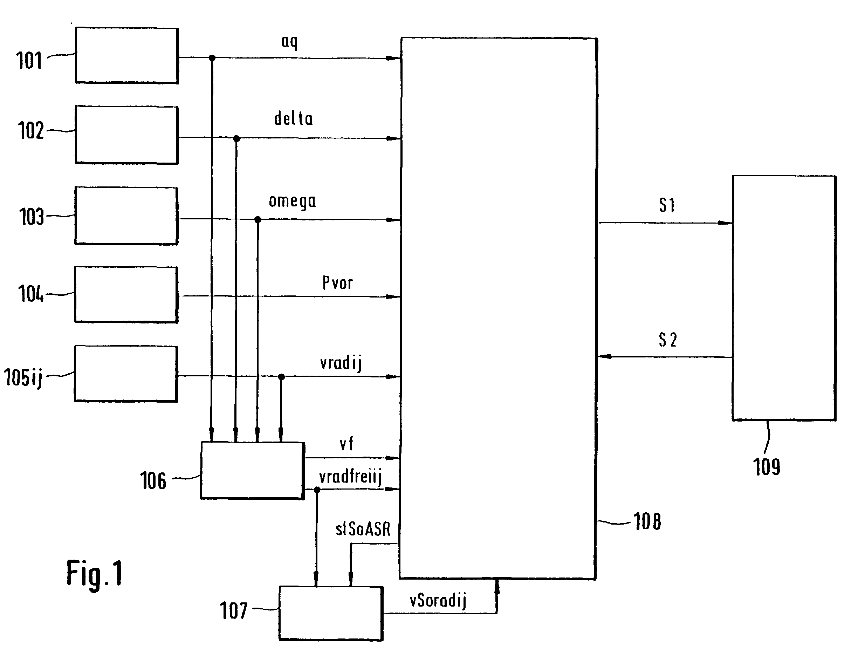

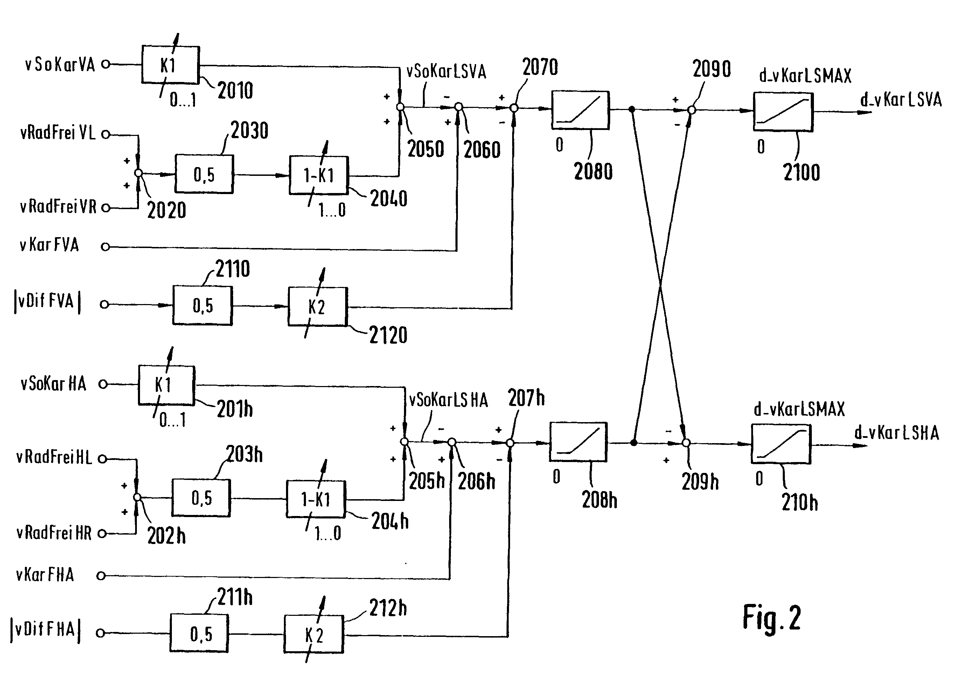

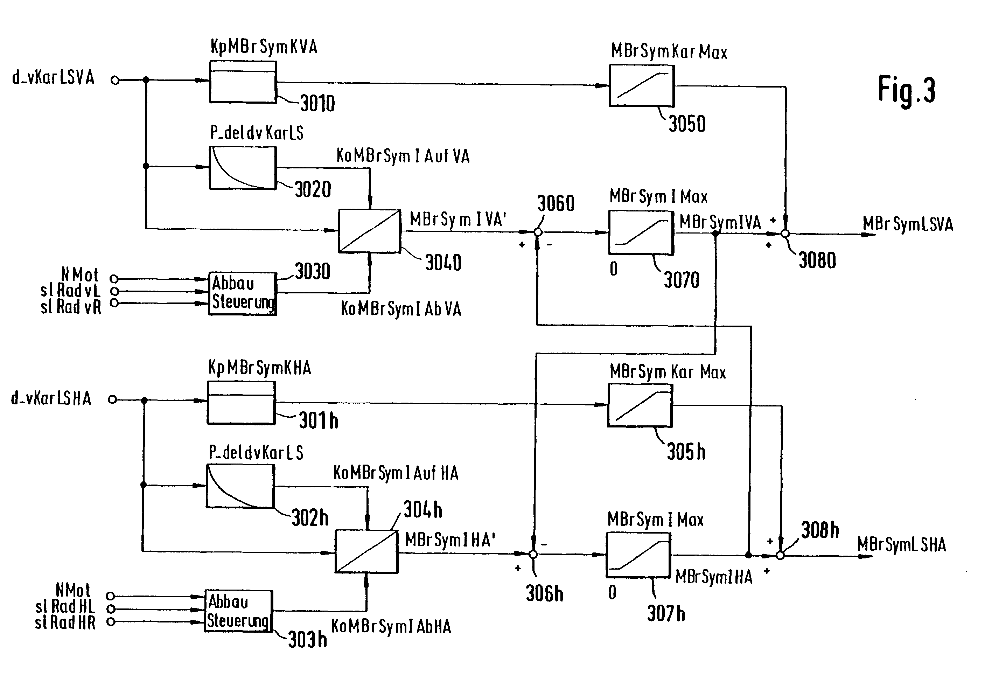

Die Zeichnung besteht aus den Figuren 1 bis 3, in denen die erfindungsgemäße Vorrichtung bzw. das erfindungsgemäße Verfahren mit Hilfe von Blockschaltbildern in unterschiedlichem Detailliertheitsgrad dargestellt ist. Blöcke mit identischen Ziffern jedoch unterschiedlichen Indizes haben dieselbe Funktion.

Ausführungsbeispiel

Das der Anmeldung zugrundeliegende Ausführungsbeispiel zeigt die Verwendung eines Bremssystems, welches die Möglichkeit eines aktiven, d.h. fahrerunabhängigen Druckaufbaus vorsieht. Dies soll keine Einschränkung darstellen. In entsprechender Weise kann die Längssperrenfunktion auch mit Hilfe einer regelbaren Längssperre oder einer entsprechend eingesetzten Kupplung realisiert werden.

In Figur 1 ist in allgemeiner Form ein Steuergerät 108 dargestellt. Bei diesem Steuergerät handelt es sich beispielsweise um ein Steuergerät, welches im Rahmen einer Fahrdynamikregelung eingesetzt wird. Bezüglich weiterführender Details sei an dieser Stelle auf die vorstehend erwähnte Veröffentlichung "FDR - Die Fahrdynamikregelung von Bosch" verwiesen. Dem Steuergerät werden verschiedene Eingangsgrößen zugeführt: Die mit Hilfe eines Querbeschleunigungssensors 101 ermittelte Querbeschleunigung aq, der mit Hilfe eines Lenkwinkelsensors 102 ermittelte Lenkwinkel delta, die mit Hilfe eines Gierratensensors 103 ermittelte Gierrate omega des Fahrzeugs, der vom Fahrer eingestellte, mit Hilfe eines Drucksensors 104 ermittelte Vordruck Pvor sowie die mit Hilfe von Raddrehzahlsensoren 105ij ermittelten Radgeschwindigkeiten vradij.

Darüber hinaus werden dem Steuergerät 108 eine Geschwindigkeitsgröße vf sowie freirollende Radgeschwindigkeiten vradfreiij zugeführt. Die freirollenden Radgeschwindigkeiten werden in einem Block 106 ausgehend von den Radgeschwindigkeitsgrößen vradij unter Berücksichtigung der Fahrzeugbewegung, die durch die Querbeschleunigung, die Gierrate und den Lenkwinkel beschrieben ist, ermittelt. Die somit ermittelten freirollenden Radgeschwindigkeiten weisen keine Geschwindigkeitsanteile mehr auf, die auf die Fahrzeugbewegung zurückgehen. Durch diese Maßnahme wird ein vorhandener geometrischer Schlupf eliminiert. Die Geschwindigkeitsgröße vf, die die Geschwindigkeit des Fahrzeuges beschreibt, wird im Block 106 in bekannter Wiese in Abhängigkeit der freirollenden Radgeschwindigkeiten vradfreiij ermittelt. Im weiteren Verlauf werden die freirollenden Radgeschwindigkeiten auch als erste Radgeschwindigkeitsgrößen bezeichnet. Die mit Hilfe der Raddrehzahlsensoren 105ij ermittelten Radgeschwindigkeiten vradij werden im weiteren auch als zweite Radgeschwindigkeitsgrößen bezeichnet.

Die freirollenden Radgeschwindigkeiten vradfreiij werden außerdem einem Block 107 zugeführt. Diesem Block wird zusätzlich ausgehend vom Block 108 eine Größe slSoASR, die den Sollwert des Antriebsschlupfs beschreibt, zugeführt. Aus diesen Größen werden im Block 107 Größen vSoradij ermittelt, die die Sollradgeschwindigkeiten beschreiben. Die Ermittlung der Größen vSoradij erfolgt beispielsweise gemäß der Gleichung

$$vSoradij= vradfreiij * (1+ slSoASR) \qquad (1).$$

Die Größen vSoradij werden dem Steuergerät 108 zur weiteren Verarbeitung zugeführt. Da die Sollradgeschwindigkeiten in Abhängigkeit der freirollenden Radgeschwindigkeiten ermittelt werden, ist auch bei ihnen ev. vorliegender geometrischer Schlupf eliminiert.

Die vorstehend für die Raddrehzahlsensoren verwendete abkürzende Schreibweise 105ij hat folgende Bedeutung: Der Index i gibt an, ob es sich um ein Vorderrad (v) oder um ein Hinterrad (h) handelt. Der Index j gibt an, ob es sich um ein rechtes (r) bzw. um ein linkes (l) Fahrzeugrad handelt. Diese Schreibweise ist für sämtliche Größen bzw. Blöcke, für die sie verwendet wird, identisch.

Ausgehend von den dem Steuergerät 108 zugeführten Größen erzeugt das Steuergerät im Rahmen der Fahrdynamikregelung gemäß dem in ihm abgelegten Regelkonzept Ansteuersignale S1 für die ihm zugeordneten Aktuatoren 109. Bei den Aktuatoren handelt es sich im Rahmen der Fahrdynamikregelung beispielsweise um Mittel zur Beeinflussung des vom Motor abgegebenen Moments und/oder um den Rädern des Fahrzeugs zugeordnete Bremsaktoren, die Teil einer hydraulischen, einer elektrohydraulischen, einer pneumatischen, einer elektropneumatischen oder einer elektromechanischen Bremsanlage sein können. Ausgehend von den Aktuatoren 109 werden dem Steuergerät Signale S2 zugeführt, die dem Steuergerät eine Information über den Betriebszustand der Aktuatoren geben. Bezüglich des im Steuergerät 108 abgelegten Regelkonzeptes sei auf die vorstehend erwähnte Veröffentlichung "FDR - Die Fahrdynamikregelung von Bosch" verwiesen.

Die vorstehend dargestellte Ansteuerung der Aktuatoren betrifft die im Rahmen der Fahrdynamikregelung durchgeführte Ansteuerung. Darüber hinaus erzeugt der Block 108 auch die zur Durchführung der erfindungsgemäßen Eingriffe erforderlichen Signale. Hierzu wird im Block 108 wenigstens ein Sollwert für ein einzustellendes Radmoment erzeugt. Dieser Sollwert wird in Signale S1 umgesetzt, mit denen im Block 109 enthaltene Mittel zur Beeinflussung des Radmoments angesteuert werden. Wie bereits erwähnt kann es sich bei diesen Mitteln um Bremsaktoren oder um eine steuerbare mechanische Sperre oder um eine steuerbare Kupplung handeln.

Darüber hinaus findet im Block 108 eine Erkennung statt, mit der festgestellt wird, ob für wenigstens ein angetriebenes Rad eine Durchdrehneigung vorliegt oder nicht. Hierzu wird für die angetriebenen Räder der jeweils vorliegende Schlupfwert dergestalt ausgewertet, daß er mit einem vorgebbaren Schwellenwert verglichen wird. Wird für ein angetriebenes Rad der Schwellenwert überschritten, so liegt für dieses Rad eine Durchdrehneigung vor. Diese Information wird im Rahmen des erfindungsgemäßen Verfahrens ausgewertet. Nur für den Fall, daß an wenigstens einem Rad eine Durchdrehneigung vorliegt, wird die Differentialsperrenfunktion aktiviert.

Wenn es sich bei der Differentialsperrenfunktion um eine Längssperre handelt, dann wird die Längssperre für gewöhnlich erst dann aktiviert, wenn an beiden Rädern einer Antriebsachse ein zu hoher Antriebsschlupf auftritt. Denn ein einzelnes durchdrehendes Rad an einer Achse wird im Normalfall zunächst von der Quersperre stabilisiert und von der Längssperre zunächst nicht bewertet. Dagegen wird die Situation, bei der wechselseitig instabile Räder an einer Achse vorliegen, es handelt sich hierbei um das sogenannte Trampeln, durch die Längssperre bewertet.

Alternativ zu der vorstehend beschriebenen Auswertung des Radschlupfes kann auch direkt die Radgeschwindigkeit ausgewertet werden.

Selbstverständlich kann es sich bei dem Steuergerät 108 auch um ein Steuergerät handeln, welches im Rahmen einer Antriebsschlupfregelung eingesetzt wird. Es kann sich auch um ein anderes Steuergerät handeln. Allerdings sollte für den Fall, daß die Längssperrenfunktion mit Hilfe von Bremseingriffen realisiert werden soll, solch ein Steuergerät und solch eine Bremsanlage verwendet werden, mit dem bzw. mit der fahrerunabhängige Bremseingriffe realisierbar sind.

Bevor auf die Figur 2 eingegangen wird, soll zunächst die Bildung verschiedener Sollwerte und Regelgrößen, die der Realisierung der Längssperrenfunktion zugrunde liegen, beschrieben werden. Diese Größen werden intern in dem Block 108 ermittelt. Grundlage für die Ermittlung dieser Größen sind zum einen die nach Gleichung (l) ermittelten Sollradgeschwindigkeiten vSoradij sowie die mit Hilfe der Raddrehzahlsensoren ermittelten Radgeschwindigkeitsgrößen vradij.

Die Rohwerte für die Sollkardangeschwindigkeiten für die Vorderachse (VA) und für die Hinterachse (HA) werden folgendermaßen bestimmt:

$$vSoKarVA = (vSoradvl + vSoradvr) / 2 \qquad (2a),$$

$$vSoKarHA = (vSoradhl + vSoradhr) / 2. \qquad (2b).$$

Zur Realisierung der Differentialsperrenfunktion werden als Regelgrößen die beiden gefilterten Achskardangeschwindigkeiten vKarFVA und vKarFHA verwendet. Hierzu werden zunächst die beiden Achskardangeschwindigkeiten vKarVA und vKarHA gemäß nachfolgender Gleichung ermittelt:

$$vKarVA = (vradvl + vradvr) / 2 \qquad (3a),$$

$$vKarHA = (vradhl + vradhr) / 2 \qquad (3b).$$

Die beiden Größen vKarVA und vKarHA werden im weiteren als Istwert für die Kardangeschwindigkeit der jeweiligen Achse bezeichnet. Durch Filterung der Größen vKarVA und vKarHA erhält man die gefilterten Achskardangeschwindigkeiten vKarFVA und vKarFHA. Der Filter ist beispielsweise als Filter 1. Ordung (PT1) ausgeführt. Über den zugehörigen Filterparameter wird die Stärke der Filterung festgelegt. Alternativ können aber auch anstelle der gefilterten Größen die beiden ungefilterten Größen vKarVA und vKarHA verwendet werden.

Zusätzlich werden achsweise die gefilterten Differenzgeschwindigkeiten vDifFVA und vDifFHA benötigt. Zunächst werden die ungefilterten Differenzgeschwindigkeiten wie folgt ermittelt:

$$vDifVA = vradvl - vradvr \qquad (4a),$$

$$vDifHA = vradhl - vradhr \qquad (4b).$$

Durch Filterung der Größen vDifVA und vDifHA ergeben sich die gefilterten Differenzgeschwindigkeiten vDifFVA und vDifFHA.

Die verschiedenen vorstehend aufgeführten Filterungen erfolgen jeweils beispielsweise unter Verwendung eines geeignet eingestellten Tiefpaßfilters.

Im folgenden wird Figur 2 beschrieben, in der die Berechnung der Regelabweichungen d_vKarLSVA für die Vorderachse und d_vKarLSHA für die Hinterachse dargestellt ist. Die beiden Größen werden im weiteren Verlauf auch als Abweichungsgrößen bezeichnet, die in Abhängigkeit des Sollwertes und des Istwertes für die Kardangeschwindigkeit ermittelt wird.

An dieser Stelle sei nochmals die erfindungsgemäße Vorgehensweise dargestellt: Tritt an beiden Rädern einer Antriebsachse gegenüber der anderen Antriebsachse ein zu hoher Antriebsschlupf auf, so kann durch einen symmetrischen Bremsmomentenaufbau an der Antriebsachse, an der der zu hohe Antriebsschlupf auftritt, eine Sperrwirkung in Längsrichtung erzielt werden. Dadurch wird die andere Antriebsachse mit einem höheren Antriebsmoment beaufschlagt. Zu diesem Zweck ist der Längssperrenregler und damit auch die Ermittlung der Regelabweichungen achsweise organisiert.

Demzufolge ist die in Figur 2 dargestellte Ermittlung der Regelabweichungen symmetrisch aus zwei identischen Zweigen aufgebaut, einem für die Vorderachse und einem für die Hinterachse. Aus diesem Grund wird nachfolgend lediglich ein Zweig, nämlich der für die Hinterachse, ausführlich beschrieben. Die Beschreibung des Zweiges für die Vorderachse ist inhaltlich identisch.

An dieser Stelle sei bemerkt, daß einzelne Größen bzw. Blökke, die im Zweig für die Vorderachse enthalten sind, mit dem Zusatz "v" gekennzeichnet sind.

Entsprechend sind einzelne Blöcke bzw. Größen, die im Zweig für die Hinterachse enthalten sind, mit dem Zusatz "h" gekennzeichnet. Blöcke mit derselben Ziffer und Größen mit demselben Variablennamen jedoch verschiedenem Index haben die gleiche Funktion bzw. Bedeutung.

Zunächst wird für den Längssperrenregler der einzustellende Arbeitspunkt, d.h. der Sollwert vSoKarLSHA an der Hinterachse ermittelt. Dieser Wert wird im weiteren Verlauf auch als Sollwert für die Kardangeschwindigkeit bezeichnet.

Hierzu wird zunächst der Rohwert für die Sollkardangeschwindigkeit vSoKarHA, die gemäß Gleichung (2b) ermittelt wurde, im Block 201h mit dem Gewichtungsfaktor K1 gewichtet. Die gewichtete Sollkardangeschwindigkeit wird einem Verknüpfungspunkt 205h zugeführt. Des weiteren wird mit Hilfe der Komponenten 202h und 203h für die Hinterachse der Mittelwert der beiden freirollenden Radgeschwindigkeiten vradFreihl und vradFreihr bereitgestellt. Hierzu wird zunächst mit dem Summationspunkt 202h die Summe der beiden freirollenden Radgeschwindigkeiten gebildet. Anschließend wird die Summe im Block 203h mit dem Faktor 0,5 multipliziert. Der so ermittelte Mittelwert wird anschließend in einem Block 204h mit einem Faktor (1-K1) gewichtet. Der gewichtete Mittelwert wird ebenfalls dem Verknüpfungspunkt 205h zugeführt. In diesem Verknüpfungspunkt wird die Summe aus der gewichteten Sollkardangeschwindigkeit und dem gewichteten Mittelwert gebildet. Diese Summe vSoKarLSHA stellt den Sollwert für die Kardangeschwindigkeit an der Hinterachse dar.

Der Gewichtungsfaktor K1 variiert zwischen den Werten 0 und 1 und wird in Abhängigkeit der Geschwindigkeitsgröße vf, die die Fahrzeuggeschwindigkeit beschreibt, verändert. Im Anfahrbereich wird K1 = 0 gesetzt, da in dieser Situation die Traktion Priorität haben soll. Mit zunehmender Fahrzeuggeschwindigkeit nähert sich K1 dem Wert 1 an.

Durch die Veränderung des Gewichtungsfaktors läßt sich der Arbeitspunkt der Längssperrenregelung gegenüber dem Arbeitspunkt einer eventuell vorhandenen Antriebsmomentenregelung (AMR) absenken. Das bedeutet, daß die Längssperre bereits ein Sperrmoment aufbaut bevor die Antriebsmomentenregelung das Antriebsmoment wieder reduzieren kann.

Nachfolgend soll unter der Annahme, daß vDifFHA = 0 ist, der physikalisch technische Hintergrund des Gewichtungsfaktors K1 erläutert werden.

Für K1 = 1 wird d_vKarLSHA = vKarFHA - vSoKarHA. Dies entspricht genau der Regelabweichung des Motorreglers. D.h. der Motorregler und die Längssperre regeln auf die gleiche Sollgröße vSoKarHA.

Für K1 = 0 wird d_vKarLSHA = vKarFHA - 0.5 (vRadFreiHL + VradFreiHR). Das bedeutet in diesem Fall: Sobald die Kardangeschwindigkeit der Hinterachse größer ist als die freirollenden Radgeschwindigkeiten, entsteht in Abhängigkeit des Verhaltens der Vorderachse eine Regelabweichung für die Längssperre. In diesem Fall kann für die Längssperre bereits eine Regelabweichung entstehen, während für den Motorregler noch keine Regelabweichung entsteht, die zu einer Reduktion des Motormoments führt.

Der Arbeitspunkt einzustellende vSoKarLSHA wird einem Verknüpfungspunkt 206h zugeführt. Diesem Verknüpfungspunkt wird auch die Ist-Kardangeschwindigkeit vKarHA, die gemäß der Gleichung (3b) ermittelt wurde zugeführt. In dem Verknüpfungspunkt 206h wird von der Ist-Kardangeschwindigkeit vKarHA der einzustellende Arbeitspunkt vSoKarLSHA, der gewissermaßen den Sollwert darstellt, abgezogen. Die dabei entstehende Differenz stellt die eigentliche Achsregelabweichung dar. Aus folgendem Grund wird der Sollwert vom Istwert abgezogen: Für den Fall, daß durchdrehende Antriebsräder vorliegen, ist der Istwert größer als der Sollwert. Folglich ergibt sich durch diese Art der Differenzbildung ein positiver Wert. Dieser positive Wert kann direkt im Rahmen des durchzuführenden Druckabbaus verarbeitet werden.

Die im Verknüpfungspunkt 206h erzeugte Differenz wird einem weiteren Verknüpfungspunkt 207h zugeführt.

Der Betrag der gefilterten Differenzgeschwindigkeit vDifFHA, die unter Verwendung von Gleichung (4b) gebildet wurde, wird in einem Block 211h mit dem Faktor 0,5 bewertet und anschließend in einem Block 212h mit einem Faktor K2 gewichtet. Die so ermittelte Größe wird dem Verknüpfungspunkt 207h zugeführt. Durch die in dem Verknüpfungspunkt 207h stattfindende Differenzbildung wird der Anteil bereitgestellt, um den beide Räder der Hinterachse über dem Sollwert vSoKarLSHA liegen. Der Faktor 0,5 ergibt sich aus der Definition der Kardangeschwindigkeit als Mittelwert.

Der Faktor K2 variiert zwischen 1 und 0. Für K2 = 1 wird der auf die Differenzgeschwindigkeit vDifFHA zurückgehende Differenzanteil vollständig ausgeblendet, was dem Normalfall entspricht. Es ist jedoch zweckmäßig, bei sogenannten "trampelnden Rädern" an einer Achse, was einer wechselseitigen Schwingung der Radgeschwindigkeiten an dieser Achse entspricht, einen entsprechenden Anteil der Differenz der Radgeschwindigkeiten auf die Regelabweichung für den Längssperrenregler aufzuschalten. Dadurch werden die Schwingungen wirksam gedämpft. Der Faktor K2 wird über die Fahrzeuggeschwindigkeit gesteuert. Der Faktor K2 wird im Anfahrbereich, d.h. für eine Fahrzeuggeschwindigkeit kleiner als 2m/s, bei schwingender Achse zu 0 gesetzt. Denkbar ist auch eine Vorgabe über eine Kennlinie.

Liegt ein Schwingen der Räder an der Hinterachse vor, so läuft die Hinterachse nicht synchron. Die Kardangeschwindigkeit an der Hinterachse ist trotz des Schwingens der Hinterräder konstant. Um die Realisierung der Differentialsperrenfunktion zu verbessern, wird die durch das Schwingen vorliegende Differenzgeschwindigkeit im Rahmen der Ermittlung der Regelabweichung aufgeschaltet.

Die mit Hilfe des Verknüpfungspunktes 207h gewonnene Regeldifferenz wird mit Hilfe eines Blockes 208h auf positive Werte begrenzt. Die so begrenzte Regeldifferenz wird sowohl einem Verknüpfungspunkt 209h als auch einem Verknüpfungspunkt 209v zugeführt. In dem Verknüpfungspunkt 209h wird von der begrenzten Regelabweichung der Hinterachse die begrenzte Regelabweichung der Vorderachse abgezogen. Durch diese Differenzbildung wird eine Koppelung zwischen der Hinterachse und der Vorderachse realisiert, die erforderlich ist, um einen Angleich der Geschwindigkeiten der beiden Achsen aneinander realisieren zu können. D.h. es wird die Abweichung der Geschwindigkeiten zwischen den beiden Achsen ermittelt. Diese Abweichung wird umgesetzt zur Ansteuerung der elektrischen Differentialsperre.

Durch Bildung der Differenz der beiden Regelabweichungen wird sichergestellt, daß die beiden Kardangeschwindigkeiten lediglich zueinander synchronisiert werden, wie dies bei einer mechanischen Längssperre der Fall ist.

Für die Hinterachse wird die Differenz der beiden Regelabweichungen anschließend mit Hilfe eines Blockes 210h begrenzt, und zwar nach unten auf den Wert 0 und nach oben auf einen Maximalwert d_vKarLSMax. Die am Ausgang des Blockes 210h vorliegende Größe d_vKarLSHA stellt die Regelabweichung bzw. die Abweichungsgröße für die Hinterachse bezüglich des Längssperrenreglers dar. Die Größe d_vKarLSHA ist ein Maß dafür, wie stark die Räder der Hinterachse durchdrehen und in welchem Maße diesbezüglich auch eine Abweichung zu der Vorderachse vorliegt.

Wie bereits oben erwähnt, ist der Zweig für die Vorderachse identisch aufgebaut, weswegen auf eine eigenständige Beschreibung dieses Zweiges verzichtet wird. Vielmehr wird auf die vorstehende Beschreibung des Zweiges für die Hinterachse verwiesen.

Nachfolgend wird auf Figur 3 eingegangen, in der der erfindungsgemäße Regler dargestellt ist.

Wie Figur 3 zu entnehmen ist, wird für jede Antriebsachse ein modifizierter PI-Regler zur Regelung der Komponenten des Längssperrenmoments eingesetzt. Aus diesem Grund ist der in Figur 3 dargestellte Regler aus zwei identischen PI-Reglern aufgebaut, einem für die Vorderachse und einem für die Hinterachse. Nachfolgend wird lediglich ein Zweig, nämlich der für die Hinterachse, ausführlich beschrieben. Die Beschreibung des Zweiges für die Vorderachse ist inhaltlich identisch. Einzelne Größen bzw. Blöcke, die im Zweig für die Hinterachse enthalten sind, sind mit dem Zusatz "h" gekennzeichnet. Entsprechendes gilt für die Vorderachse. Blöcke mit derselben Ziffer und Größen mit demselben Variablennamen jedoch verschiedenem Index haben die gleiche Funktion bzw. Bedeutung.

Die Regelabweichung d_vKarLSHA wird einem Block 301h zugeführt, in dem sie mit einem Parameter KpMBrSymKHA multipliziert wird. Die so erhaltene Größe wird einem Block 305h zugeführt, in welchem sie auf einen Maximalwert MBrSymKarMax begrenzt wird. Der so gewonnene P-Anteil, der mit MBrSymPHA bezeichnet sein soll, wird einem Verknüpfungspunkt 308h zugeführt. Der P-Anteil dient der Verbesserung des dynamischen Regelverhaltens, da durch ihn die Dynamik des Längssperrenreglers erhöht wird. Die Begrenzung des P-Anteils vermeidet zu starke Momentenstöße.

Block 304h stellt einen Integrator dar, der zum Aufbau des Sperrmoments benutzt wird, d.h. wenn die Regelabweichung d_vKarLSHA größer als ein Parameter P_dvKarLSMin ist. Ein entsprechender Vergleich findet in dem Integrator 304h statt. Dadurch wird eine Totzone realisiert, wodurch ein zu empfindliches Aufintegrieren verhindert werden kann.

Die Integratorverstärkung KoMBrSymIAufHA wird in Abhängigkeit der differenzierten Abweichungsgröße mit Hilfe eines Differenzier 302h bestimmt. Hierzu wird zunächst KoMBrSymIAufHA gleich P_KoMBrSymIAuf1 gesetzt. Unterschreitet die differenzierte Regelabweichung den Wert P_deldvKarLS so wird KoMBrSymIAufHA zurückgenommen auf den Wert P_KoMBrSymIAuf2.

Aus folgendem Grund wird die Integrationsverstärkung in Abhängigkeit der differenzierten Abweichungsgröße ermittelt: Durch die Auswertung der differenzierten Abweichungsgröße liegt eine Information darüber vor, ob die Abweichungsgröße zunimmt oder abnimmt. Stellt man nun fest, daß die Regelabweichung eine Umkehrtendenz zeigt, so wird die Integration dadurch verlangsamt, daß in diesem Fall der kleinere Wert P_KoMBrSymIAuf2 verwendet wird. Durch diese Maßnahme wird ein Momentenüberschuß, der ein "Abreißen" der anderen Achse begünstigt, vermieden.

Ist die Regelabweichung kleiner als der Parameter P_dvKarLSMin, erfolgt ein gesteuerter Abbau des I-Anteils mit dem Gradienten KoMBrSymIAbHA. Ein schneller Abbau des I-Anteils einer Antriebsachse erfolgt immer dann, wenn für diese Achse eine Radschlupfgröße, die den am jeweiligen Rad vorherrschenden Radschlupf beschreibt, beispielsweise slradhl oder slradhr, den Bremsschlupfwert P_slBrems überschreitet. In beiden Fällen handelt es sich um einen gesteuerten Abbau, allerdings mit unterschiedlichem Gradienten. Eine entsprechende Auswertung des Radschlupfes findet in einem Block 303h statt. Durch die Auswertung des Radschlupfes werden plötzliche Wechsel des Reibwerts, die zu einem Bremsschlupf führen, berücksichtigt.

Wie man erkennt, wird in Abhängigkeit der Ableitung der Regelabweichung d_vKarLSHA ein Parameter des Integrators umgeschaltet.

Bei Fahrzeugen mit manuellem Getriebe erfolgt auch eine Überwachung der Motordrehzahl. Diese findet ebenfalls im Block 303h statt. Unterschreitet die Motordrehzahl Nmot einen Wert P_nMotLSAbfast, so erfolgt ebenfalls ein schneller Abbau des I-Anteils mit dem Gradienten P_MbrSymIAbHAfast, der dem Block 304h über die Größe KoMBrSymIAbHA zugeführt wird. Durch das Öffnen der Längssperre wird ein Abwürgen des Motors verhindert. Der Wert der Größe P_nMotLSAbfast wird im Vorfeld in Abhängigkeit des Verlaufes des Motormoments ermittelt, und ist somit vom jeweiligen Motortyp abhängig. Dieser Wert liegt im Bereich von beispielsweise 1200 bis 1500U/min.

An dieser Stelle sei festgehalten: Der Aufbau des Bremsmoments im Rahmen der Differentialsperrenfunktion erfolgt in Form einer Regelung. Dagegen erfolgt der Abbau des Bremsmoments in Form einer Steuerung. Zur Beeinflussung des Aufbaus, genauer gesagt zur Beeinflussung des zeitlichen Verlaufs des Aufbaus, wird dem Block 304h die Größe KoMBrSymIAufHA zugeführt. In entsprechender Weise wird dem Block 304h zur Beeinflussung des Abbaus die Größe KoMBrSymIAbHA zugeführt.

Die im Block 304h erzeugte Größe MBrSymIHA' wird einem Verknüpfungspunkt 306h zugeführt. Ein eventuell vorhandener Längssperrenanteil, von der anderen Achse - in diesem Fall der Vorderachse - herrührend, soll auch berücksichtigt werden. Deshalb wird dem Verknüpfungspunkt 306h die mit Hilfe des Blockes 307v ermittelte Größe MBrSymIVA zugeführt. Aus diesen beiden Größen wird im Verknüpfungspunkt 306h eine Differenz gebildet. Somit kann stationär immer nur an einer Achse ein Längssperrenanteil wirksam sein. Regelschwingungen werden dennoch unterbunden, da dynamisch kurze Überschneidungsphasen stattfinden, die dämpfend auf das System wirken. Bei einem Allradfahrzeug kann es zu Längsschwingungen zwischen der Vorderachse und der Hinterachse kommen, da die Eigendämpfung der Regelstrecke gering ist. Die Überschneidungsphasen wirken schwingungsdämpfend.

Der so mit Hilfe des Verknüpfungspunktes 306h gewonnene I-Anteil wird mit Hilfe eines Blockes 307h begrenzt. Nach unten hin auf den Wert 0 und nach oben hin auf einen Wert MBrSymIMax.

Der Maximalwert MBrSymIMax für den I-Anteil wird durch eine Reihe von Größen bestimmt: Zum einen wird er durch die Stellgliedreserve bestimmt. D.h. im Fall der Bremshydraulik darf ein aus dem maximal zur Verfügung stehenden Kreisdruck resultierendes Bremsmoment nicht überschritten werden. Zum anderen wird er auf einen Anteil des momentan zur Verfügung stehenden Kardanantriebsmoments begrenzt. Darüber hinaus wird er in Abhängigkeit der Fahrzeuggeschwindigkeit begrenzt, d.h. mit zunehmender Fahrzeuggeschwindigkeit wird das zulässige Längssperrrenmoment geringer. Oberhalb einer bestimmten Fahrzeuggeschwindigkeit ist kein Längssperrrenmoment erlaubt. Außerdem kann MBrSymIMax auch eine Funktion der Regelzeit, in diesem Fall der Regelzeit eines Antriebsschlupfreglers, sein. Mit zunehmender Regelzeit wird ein stärkerer Eingriff der Längssperre ermöglicht, beispielsweise sei in diesem Zusammenhang auf einen Anfahrvorgang im Gelände hingewiesen.

Der begrenzte I-Anteil wird dem Verknüpfungspunkt 308h zugeführt. In diesem Verknüpfungspunkt werden die beiden Regleranteile, der P-Anteil und der I-Anteil addiert. Durch Addition der beiden Regleranteile erhält man achsweise die Komponente MBrSymLSHA für das Längssperrrenmoment. Die Größe MBrSymLSHA stellt den Sollwert für das einzustellende Radmoment dar. Da gemäß dem Ausführungsbeispiel als Stellglied Bremsaktuatoren eingesetzt werden, handelt es sich bei dieser Größe genauer gesagt um einen Sollwert für ein Radbremsmoment.

Die ermittelten Komponenten MBrSymLSVA bzw. MBrSymLSHA des Längssperrenmoments werden für die jeweilige Fahrzeugachse auf die jeweils betreffenden Räder zu gleichen Teilen aufgeteilt. D.h. es findet eine symmetrische Aufteilung zwischen dem linken und dem rechten Rad einer Achse statt. Ein unterlagertes Stellersystem realisiert, neben Momentenanforderungen anderer Regelsysteme, die entsprechenden Radmomente. Bei dem unterlagerten Stellersystem kann es sich beispielsweise um ein Bremssystem, mit dem aktive, d.h. fahrerunabhängige Bremseneingriffe realisierbar sind, handeln. Ferner kann es sich um eine regelbare Längssperre oder eine entsprechende Kupplung handeln.

Für die erfindungsgemäße Vorrichtung bzw. für das erfindungsgemäße Verfahren können ergänzende spezielle Funktionen vorgesehen sein. Hierbei kann es sich beispielsweise um eine Schutzvorrichtung handeln, mit der eine Überlastung der Radbremsen vermieden wird. Bei dieser Schutzvorrichtung wird mit einem bekannten Bremsentemperaturmodell die geschätzte Temperatur der Bremsscheibe ermittelt. Hierzu wird mittels der geschätzten Radmomente die Verlustleistung berechnet. Durch eine Bilanz die Aufheizen und Abkühlen erfaßt, kann auf die Scheibentemperatur geschlossen werden.

Wird ein kritischer Temperaturwert an einer oder mehreren Radbremsen überschritten, so erfolgt entweder kein neuer Aufbau eines Längssperrenmoments mehr oder ein bereits bestehendes Längssperrenmoment wird abgebaut. Dies betrifft jeweils die Achse, an der mindestens eine überhitzte Radbremse vorhanden ist.

Abschließend seien noch einige wichtige Aspekte aufgeführt. Durch die Realisierung der Differentialsperrenfunktion wird das Anfahrverhalten eines Fahrzeuges verbessert, da eine Differenz zwischen der Geschwindigkeit der Vorderachse und der der Hinterachse ausgeglichen wird. D.h. die Realisierung der Differentialsperrenfunktion wird folglich im unteren Geschwindigkeitsbereich eingesetzt. Mit anderen Worten: Die Realisierung der Differentialsperrenfunktion stellt eine Anfahrhilfe dar.

Ferner sei bemerkt, daß die in der Beschreibung gewählte Form des Ausführungsbeispiels sowie die in den Figuren gewählte Darstellung keine einschränkende Wirkung auf die erfindungswesentliche Idee haben soll. Beispielsweise weist das dem Ausführungsbeispiel zugrundeliegende Fahrzeug zwei Antriebsachsen auf. Dies soll keine Einschränkung darstellen. Selbstverständlich kann das erfindungsgemäße Verfahren bzw. die erfindungsgemäße Vorrichtung auch für Fahrzeuge eingesetzt werden, die über mehr als zwei angetriebene Achsen verfügen. In diesem Fall ist eine entsprechende Adaption erforderlich.

**Patentansprüche**

1. Verfahren zur Realisierung einer Differentialsperrenfunktion in Längsrichtung zwischen Vorderachse und Hinterachse für ein Fahrzeug mit Allradantrieb,

   - mit dem bei Durchdrehneigung wenigstens eines angetriebenen Rades mit Hilfe von fahrerunabhängig durchgeführten Eingriffen an wenigstens einem Mittel zur Beeinflussung des Radmoments die Funktion einer zwischen der Vorderachse und der Hinterachse des Fahrzeuges wirkenden Differentialsperre realisiert wird,
   - wobei zur Durchführung der fahrerunabhängig durchgeführten Eingriffe wenigstens ein Sollwert (MBrSymLSVA, MBrSymLSHA) für ein einzustellendes Radmoment vorgegeben wird, **dadurch gekennzeichnet, daß**
   - in Abhängigkeit erster Radgeschwindigkeitsgrößen (vradfreiij), die die freirollenden Radgeschwindigkeiten beschreiben, und einem Sollwert (slSoASR) für den Antriebsschlupf, ein Sollwert (vSoKarLSVA, vSoKarLSHA) für die Kardangeschwindigkeit einer Achse ermittelt wird,
   - in Abhängigkeit von zweiten Radgeschwindigkeitsgrößen (vradij), die die mit Hilfe der Raddrehzahlsensoren ermittelten Radgeschwindigkeiten beschreiben, ein Istwert (vkarVA, vKarHA) für die Kardangeschwindigkeit derselben Achse ermittelt wird,
   - in Abhängigkeit dieses Sollwertes und dieses Istwertes eine Abweichungsgröße (d_vKarLSVA, d_vKarLSHA) ermittelt wird,
   - diese Abweichungsgröße mit Hilfe eines PI-Reglers in den Sollwert für ein einzustellendes Radmoment umgesetzt wird, wobei das Reglermittel einen Proportional- und einen Integralanteil aufweist, wobei eine Integratorverstärkung (KoMBrSymIAufHA, KoMBrSymIAufVA) für den Integrationsanteil in Abhängigkeit des Wertes der differenzierten Abweichungsgröße ermittelt wird und wobei der Integralanteil schnell abgebaut wird, wenn für die jeweilige Achse wenigstens eine Radschlupfgröße (slRadij) einen vorgegebenen Wert (P_slBRems) überschreitet und

- durch die Vorgabe des wenigstens einen Sollwertes die für die angetriebenen Fahrzeugachsen vorliegenden Geschwindigkeiten einander angenähert werden.

2. Verfahren nach Anspruch 1, **dadurch gekennzeichnet,**
**daß** es sich bei dem Mittel zur Beeinflussung des Radmomentes um einen einem Rad des Fahrzeuges zugeordneten Bremsaktuator, der Teil einer Bremsanlage ist, mit der fahrerunabhängig Bremsmomente an einzelnen Rädern des Fahrzeuges erzeugt werden können, oder um eine steuerbare mechanische Sperre oder um eine steuerbare Kupplung handelt.

3. Verfahren nach Anspruch 1, **dadurch gekennzeichnet,**
**daß** es sich bei dem vorgegebenen Sollwert um einen Sollwert für ein Radbremsmoment handelt.

4. Verfahren nach Anspruch 1, **dadurch gekennzeichnet,**
**daß** der Sollwert für die Kardangeschwindigkeit so gewählt wird, daß die Differentialsperrenfunktion zeitlich vor einer Motormomentenregelung aktiviert wird, insbesondere wird hierfür der Sollwert für die Kardangeschwindigkeit in Abhängigkeit einer Geschwindigkeitsgröße (vf), die die Fahrzeuggeschwindigkeit beschreibt, ermittelt.

5. Verfahren nach Anspruch 1, **dadurch gekennzeichnet,**
**daß** bei der Ermittlung der Abweichungsgröße Einflüsse in den zweiten Radgeschwindigkeitsgrößen, die auf wechselseitige Schwingungen der Radgeschwindigkeiten an der jeweiligen Achse zurückgehen, berücksichtigt werden.

6. Vorrichtung zur Realisierung einer Differentialsperrenfunktion für ein Fahrzeug,

- wobei die Vorrichtung Mittel zur Beeinflussung des Radmoments enthält,
- wobei bei Auftreten einer Druchdrehneigung an wenigstens einem angetriebenen Rad mit Hilfe von fahrerunabhängig durchgeführten Eingriffen an wenigstens einem der Mittel zur Beeinflussung des Radmoments die Funktion einer zwischen der Vorderachse und der Hinterachse des Fahrzeuges wirkenden Differentialsperre realisiert wird,
- wobei zur Durchführung der fahrerunabhängig durchgeführten Eingriffe wenigstens ein Sollwert (MBrSymlSVA, MBrSymLSHA) für ein einzustellendes Radmoment vorgegeben wird, **gekennzeichnet durch** folgende Merkmale:

- dass in Abhängigkeit erster Radgeschwindigkeitsgrößen (vradfreiij), die die freirollenden Radgeschwindigkeiten beschreiben, und einem Sollwert (slSoASR) für den Antriebsschlupf, ein Sollwert (vSoKarLSVA, vSoKarLSHA) für djje Kardangeschwindigkeit einer Achse ermittelt wird,
- dass in Abhängigkeit von zweiten Radgeschwindigkeitsgrößen (vradij), die die mit Hilfe der Raddrehzahlsensoren ermittelten Radgeschwindigkeiten beschreiben, ein Istwert (vkarVA, vKarHA) für die Kardangeschwindigkeit derselben Achse ermittelt wird,
- dass in Abhängigkeit dieses Sollwertes und dieses Istwertes eine Abweichungsgröße (d_vKarLSVA, d_vKarLSHA) ermittelt wird,
- dass diese Abweichungsgröße mit Hilfe eines PI-Reglers in den Sollwert für ein einzustellendes Radmoment umgesetzt wird, wobei das Reglermittel einen Proportionalund einen Integralanteil aufweist, wobei eine Integratorverstärkung (KoMBrSymIAufHA, KoMBrSymIAufVA) für den Integrationsanteil in Abhängigkeit des Wertes der differenzierten Abweichungsgröße ermittelt wird und wobei der Integralanteil schnell abgebaut wird, wenn für die jeweilige Achse wenigstens eine Radschlupfgröße (slRadij) einen vorgegebenen Wert (P_slBRems) überschreitet und
- dass **durch** die Vorgabe des wenigstens einen Sollwertes die für die angetriebenen Fahrzeugachsen vorliegenden Geschwindigkeiten einander angenähert werden.

**Claims**

1. Method for implementing a differential locking function in the logitudinal direction between the front axle and rear axle of a vehicle with all-wheel drive,

- with which, when there is a tendency of at least one driven wheel to spin, the function of a differential lock which acts between the front axle and the rear axle of the vehicle is implemented using interventions in at least one means which are carried out independently of the driver in order to influence the wheel torque,
- at least one setpoint value (MBrSymLSVA, MBrSymLSHA) for a wheel torque which is to be set being predefined in order to carry out the interventions which are carried out independently of the driver, **characterized in that**,
- a setpoint value (vSoKarLSVA, vSoKarLSHA) for the universal joint speed of an axle is determined as a function of first wheel speed variables (vradfreiij) which describe the free-rolling wheel speed, and a setpoint value (slSoASR) for the drive slip,

- an actual value (vkarVA, vKarHA) for the universal joint speed of the same axle is determined as a function of second wheel speed variables (vradij) which describe the wheel speeds determined using the wheel speed sensors,
- a deviation variable (d_vKarLSVA, d_vKarLSHA) is determined as a function of this setpoint value and this actual value,
- this deviation variable is converted, using a PI controller, into the setpoint value for a wheel torque which is to be set, the controller means having a proportional component and an integral component, an integrator amplification (KoMBrSymIAufHA, KoMBrSymIAufVA) for the integration component being determined as a function of the value of the differentiated deviation variable, and the integral component being quickly reduced if at least one wheel slip variable (slRadij) exceeds a predefined value (P_slBRems) for the respective axle, and
- the speeds which are present for the driven wheel axles are approximated to one another by predefining the at least one setpoint value.

2. Method according to Claim 1, **characterized in that** the means for influencing the wheel torque is a brake actuator which is assigned to a wheel of the vehicle and is part of a brake system with which braking torques can be generated at individual wheels of the vehicle independently of the driver, or a controllable mechanical lock or a controllable clutch.

3. Method according to Claim 1, **characterized in that** the predefined setpoint value is a setpoint value for a wheel braking torque.

4. Method according to Claim 1, **characterized in that** the setpoint value for the universal joint speed is selected in such a way that the differential lock function is actuated chronologically before engine torque control, in particular the setpoint value for the universal joint speed is determined for this as a function of a speed variable (vf) which describes the speed of the vehicle.

5. Method according to Claim 1, **characterized in that** influences in the second wheel speed variables which are due to alternating oscillations of the wheel speeds at the respective axle are taken into account in the determination of the deviation variable.

6. Device for implementing a differential lock function for a vehicle,

- in which the device contains means for influencing the wheel torque,
- in which, when there is a tendency of at least one driven wheel to spin, the function of a differential lock which acts between the front axle and the rear axle of the vehicle is implemented using interventions in at least one of the means which were carried out independently of the driver in order to influence the wheel torque,
- at least one setpoint value (MBrSymLSVA, MBrSymLSHA) for a wheel torque which is to be set being predefined in order to carry out the interventions which are carried out independently of the driver, **characterized by** the following features:

  - a setpoint value (vSoKarLSVA, vSoKarLSHA) for the universal joint speed of an axle is determined as a function of first wheel speed variables (vradfreiij) which describe the free-rolling wheel speeds, and a setpoint value (slSoASR) for the drive slip,
  - an actual value (vkarVA, vKarHA) for the universal joint speed of the same axle is determined as a function of second wheel speed variables (vradij) which describe the wheel speeds determined using the wheel speed sensors,
  - a deviation variable (d_vKarLSVA, d_vKarLSHA) is determined as a function of this setpoint value and this actual value,
  - this deviation variable is converted, using a PI controller, into the setpoint value for a wheel torque which is to be set, the controller means having a proportional component and an integral component, an integrator amplification (KoMBrSymIAufHA, KoMBrSymIAufVA) for the integration component being determined as a function of the value of the differentiated deviation variable, and the integral component being quickly reduced if at least one wheel slip variable (slRadij) exceeds a predefined value (P_slBRems) for the respective axle, and
  - the speeds which are present for the driven wheel axles are approximated to one another by predefining the at least one setpoint value.

**Revendications**

1. Procédé pour réaliser une fonction de blocage différentiel en direction longitudinale entre l'essieu avant et l'essieu arrière pour un véhicule muni d'une traction intégrale,

- grâce auquel, en cas de tendance au patinage d'au moins une roue entraînée, la fonction d'un blocage différentiel qui agit entre l'essieu avant et l'essieu arrière du véhicule est obtenue à l'aide d'interventions réalisées indépendamment du conducteur sur au moins un moyen destiné à agir sur le moment de roue,
- selon lequel, pour exécuter les interventions réalisées indépendamment du conducteur, on prédétermine au moins une valeur théorique (MBrSymLSVA, MBrSymLSHA) pour un moment de roue à régler,

**caractérisé en ce que**

- on établit une valeur théorique (vSoKarLSVA, vSoKarLSHA) pour la vitesse du cardan d'un essieu en fonction de premières grandeurs de vitesse de roue (vradfreiij) qui décrivent les vitesses de roue en course libre et d'une valeur théorique (s1SoASR) pour le patinage d'accélération,
- on établit une valeur effective (vKarVA, vKarHA) pour la vitesse du cardan du même essieu en fonction de deuxièmes grandeurs de vitesse de roue (vradij) qui décrivent les vitesses de roue établies à l'aide des capteurs de vitesse de roue,
- on détermine une grandeur d'écart (d_vKarLSVA, d_vKarLSHA) en fonction de cette valeur théorique et de cette valeur effective,
- cette grandeur d'écart est transformée en la valeur théorique pour un moment de roue à régler à l'aide d'un régulateur à action proportionnelle et intégrale, le moyen de régulation présentant une partie proportionnelle et une partie intégrale, une amplification de l'intégrateur (KoMBrSymIAufHA, KoMBrSymIAufVA) pour la partie d'intégration étant établie en fonction de la valeur de la grandeur d'écart différenciée et la partie intégrale étant rapidement diminuée lorsque, pour l'essieu concerné, au moins une grandeur de patinage de roue (s1Radij) dépasse une valeur prédéfinie (P_slBRems) et
- les vitesses qui existent pour l'essieu de véhicule entraîné sont rapprochées l'une de l'autre en prédéterminant la valeur théorique au moins au nombre d'une.

**2.** Procédé selon la revendication 1,
**caractérisé en ce que**
pour ce qui est du moyen destiné à agir sur le moment de roue, il s'agit d'un actionneur de frein qui est associé à une roue du véhicule et qui fait partie d'une installation de freinage à l'aide de laquelle des couples de freinage peuvent être produits indépendamment du conducteur sur des roues particulières du véhicule ou il s'agit d'un blocage mécanique réglable ou d'un embrayage réglable.

**3.** Procédé selon la revendication 1,
**caractérisé en ce que**
pour ce qui est de la valeur théorique prédéterminée, il s'agit d'une valeur théorique pour un couple de freinage sur roue.

**4.** Procédé selon la revendication 1,
**caractérisé en ce que**
la valeur théorique pour la vitesse du cardan est choisie de telle manière que la fonction de blocage différentiel est activée chronologiquement avant un réglage du couple moteur, à cet effet on établit en particulier la valeur théorique pour la vitesse du cardan en fonction d'une grandeur de vitesse (vf) qui décrit la vitesse du véhicule .

**5.** Procédé selon la revendication 1,
**caractérisé en ce que**
lorsqu'on détermine la grandeur de tolérance, on prend en compte des influences dans les deuxièmes grandeurs de vitesse de roue qui sont dues à des variations réciproques des vitesses de roue sur l'essieu concerné.

**6.** Dispositif pour réaliser une fonction de blocage différentiel sur un véhicule,

- pour lequel le dispositif contient des moyens destinés à agir sur le moment de roue,
- pour lequel, lorsqu'une tendance au patinage apparaît sur au moins une roue entraînée, la fonction d'un blocage différentiel qui agit entre l'essieu avant et l'essieu arrière du véhicule est obtenue à l'aide d'interventions réalisées indépendamment du conducteur sur au moins un des moyens destinés à agir sur le moment de roue,
- pour lequel, pour exécuter les interventions réalisées indépendamment du conducteur, on prédétermine au moins une valeur théorique (MBrSymLSVA, MBrSymLSHA) pour un moment de roue à régler,
- pour lequel on établit une valeur théorique (vSoKarLSVA, vSoKarLSHA) pour la vitesse du cardan d'un essieu en fonction de premières grandeurs de vitesse de roue (vradfreiij) qui décrivent les vitesses de roue en course libre et d'une valeur théorique (s1SoASR) pour le patinage d'accélération,
- pour lequel on établit une valeur effective (vKarVA, vKarHA) pour la vitesse du cardan du même essieu en fonction de deuxièmes grandeurs de vitesse de roue (vradij) qui décrivent les vitesses de roue établies à l'aide des capteurs de vitesse de roue,

- pour lequel on détermine une grandeur d'écart (d_vKarLSVA, d_vKarLSHA) en fonction de cette valeur théorique et de cette valeur effective,

- pour lequel cette grandeur d'écart est transformée en la valeur théorique pour un moment de roue à régler à l'aide d'un régulateur à action proportionnelle et intégrale, le moyen de régulation présentant une partie proportionnelle et une partie intégrale, une amplification de l'intégrateur (KoMBrSymIAufHA, KoMBrSymIAufVA) pour la partie d'intégration étant établie en fonction de la valeur de la grandeur d'écart différenciée et la partie intégrale étant rapidement diminuée lorsque, pour l'essieu concerné, au moins une grandeur de patinage de roue (slRadij) dépasse une valeur prédéfinie (P_slBRems) et

- pour lequel les vitesses qui existent pour l'essieu de véhicule entraîné sont rapprochées l'une de l'autre en prédéterminant la valeur théorique au moins au nombre d'une.

Fig.1

EP 1 135 273 B1

Fig. 2

vSoKarVA — K1 [0...1] (2010)
vRadFreiVL, vRadFreiVR → + + (2020) → 0,5 (2030) → 1-K1 [1...0] (2040)
→ + + (2050) → + + (2060) → vSoKarLSVA → + − (2070) → [0] (2080) → + − (2090) → d_vKarLSMAX [0] (2100) → d_vKarLSVA
vKarFVA (2110)
|vDifFVA| → 0,5 → K2 (2120)

vSoKarHA — K1 [0...1] (201h)
vRadFreiHL, vRadFreiHR → + + (202h) → 0,5 (203h) → 1-K1 [1...0] (204h)
→ + + (205h) → − + (206h) → vSoKarLSHA → + − (207h) → [0] (208h) → − + (209h) → d_vKarLSMAX [0] (210h) → d_vKarLSHA
vKarFHA (211h)
|vDifFHA| → 0,5 → K2 (212h)

16

Fig.3

17